# DEMANDE DE BREVET EUROPEEN

(11) **EP 4 600 120 A1**
(43) Date de publication de la demande: **13.08.2025**
(21) Numéro de dépôt: 25155322.8
(22) Date de dépôt: 31.01.2025
(51) Int. Cl.: B62D 25/08, B60D 1/52, B60K 15/063, B60K 1/00, B60K 1/04

(54) **AGENCEMENT POUR VÉHICULE COMPRENANT UN RÉSERVOIR, UNE TRAVERSE D'ABSORPTION DE CHOCS, ET UNE COLONNETTE CENTRALE APTE À FIXER UN CROCHET D'ATTELAGE**

(30) Priorité: 08.02.2024 FR 2401250
(71) Demandeur: Renault s.a.s, 92100 Boulogne Billancourt (FR)
(72) Inventeur: GRENIER, Laurent, 78280 GUYANCOURT (FR); MOUSSI, Kamel, 78280 GUYANCOURT (FR)

(57) **Abrégé**

L'invention porte sur un agencement (2) pour un véhicule comprenant un réservoir (3) destiné à stocker un fluide énergétique, le réservoir (3) comprenant une structure rigide destinée à former une partie d'une structure d'un soubassement (8) d'un tel véhicule, le réservoir (3) comprenant une face arrière (3R) s'étendant selon un plan vertical et transversal, un premier élément (11) de type traverse d'absorption de chocs s'étendant transversalement et étant agencé derrière le réservoir (3), un deuxième élément (20) de type colonnette centrale s'étendant longitudinalement entre la face arrière (3R) du réservoir (3) et la traverse (11), la colonnette centrale (20) étant sensiblement centrée par rapport à un plan médian d'un tel véhicule et comprenant un moyen de fixation principal destiné à la fixation d'un crochet d'attelage.

## Description

### Domaine Technique de l'invention

L'invention concerne un agencement pour un véhicule comprenant un réservoir, une traverse d'absorption de chocs et une colonnette centrale pour la fixation d'un crochet d'attelage. L'invention porte encore sur un véhicule comprenant un tel agencement. L'invention porte encore sur un procédé d'assemblage d'un tel agencement.

### Etat de la technique antérieure

Un véhicule, notamment un véhicule automobile, peut généralement être équipé d'un attelage de sorte à pouvoir tracter par exemple une remorque, une caravane, un van ou encore pour recevoir un porte-vélo. Un tel attelage est complexe à installer sur le véhicule. En effet, le montage de l'attelage nécessite généralement le démontage d'un bouclier ou pare-chocs arrière, éventuellement d'une ligne d'échappement et/ou d'au moins un passage de roue, et/ou de divers éléments de sorte à permettre de fixer des renforts latéraux d'un tel attelage sur des longerons d'un tel véhicule. En outre, des modifications de certains éléments d'origine sont nécessaires, par exemple un découpage d'un tel pare-chocs arrière pour le passage de l'attelage à travers celui-ci.

Ainsi, l'installation d'un attelage est long, fastidieux et nécessite par conséquent l'intervention d'un professionnel en après-vente du véhicule. Il en résulte que cette installation est en outre onéreuse.

De plus, une fois l'attelage installé sur le véhicule, une partie conséquente d'un tel attelage demeure fixée sur le véhicule même si la boule d'un tel attelage est démontée entre deux utilisations de l'attelage. En effet, des renforts latéraux et une traverse généralement restent fixés au châssis d'un tel véhicule, ce qui alourdit le véhicule. Par exemple, le véhicule a une masse augmentée d'environ vingt kilogrammes.

Une telle situation n'est pas optimale puisqu'elle engendre une surconsommation de carburant et par conséquent une augmentation de production de CO2, et, notamment en cas de véhicule électrique, une baisse de l'autonomie d'un tel véhicule.

### Présentation de l'invention

Le but de l'invention est de fournir un agencement remédiant aux inconvénients ci-dessus.

Plus précisément, un objet de l'invention est de proposer un agencement permettant un montage simple et rapide, ainsi qu'un démontage simple et rapide, d'un crochet d'attelage directement au niveau d'une traverse d'absorption de chocs de sorte à s'affranchir de l'étape de fixation d'un attelage sur des longerons d'un châssis d'un tel véhicule en après-vente.

### Résumé de l'invention

Pour atteindre cet objectif, l'invention porte sur un agencement pour un véhicule comprenant :
- un réservoir destiné à stocker un fluide énergétique, le réservoir comprenant une structure rigide destinée à former une partie d'une structure d'un soubassement d'un tel véhicule, le réservoir comprenant une face arrière s'étendant selon un plan vertical et transversal ou sensiblement vertical et transversal,
- un premier élément de type traverse d'absorption de chocs s'étendant transversalement et étant agencé derrière le réservoir,
- un deuxième élément de type colonnette centrale s'étendant longitudinalement entre la face arrière du réservoir et la traverse, la colonnette centrale étant sensiblement centrée par rapport à un plan médian d'un tel véhicule, et comprenant un moyen de fixation principal destiné à la fixation d'un crochet d'attelage.

Le moyen de fixation peut comprendre un taraudage ménagé dans la colonnette centrale, notamment un taraudage ayant un axe s'étendant longitudinalement.

Le moyen de fixation peut comprendre un alésage de centrage ménagé au sein de la colonnette centrale, notamment un alésage de centrage ayant un axe confondu ou sensiblement confondu avec l'axe du taraudage.

L'agencement peut comprendre en outre un crochet d'attelage, le crochet d'attelage pouvant comprendre une partie cylindrique pouvant se centrer par rapport à l'alésage de centrage et une partie filetée pouvant coopérer avec le taraudage.

Le crochet d'attelage peut comprendre un corps principal et un moyen de maintien pour maintenir en position le corps principal par rapport à la traverse d'absorption de chocs.

Le moyen de maintien peut comprendre un bras droit pouvant être monté pivotant au niveau d'une première extrémité du bras droit par rapport au corps principal et un bras gauche pouvant être monté pivotant au niveau d'une première extrémité du bras gauche par rapport au corps principal.

Le bras droit peut être fixé à la traverse d'absorption de chocs au niveau d'une deuxième extrémité du bras droit et le bras gauche peut être fixé à la traverse d'absorption de chocs au niveau d'une deuxième extrémité du bras gauche.

La traverse d'absorption de chocs peut comprendre un perçage droit et un perçage gauche, la deuxième extrémité du bras droit pouvant être fixée au niveau du perçage droit, notamment par un système vis-écrou, et la deuxième extrémité du bras gauche pouvant être fixée au niveau du perçage gauche, notamment par un système vis-écrou.

Le bras droit et le bras gauche peuvent être courbés et/ou pliés entre leur première extrémité et leur deuxième extrémité respective, notamment en présentant un angle droit ou sensiblement un angle droit.

L'agencement peut comprendre un longeronnet gauche s'étendant longitudinalement depuis le réservoir, notamment depuis la face arrière du réservoir, jusqu'à la traverse d'absorption de chocs et un longeronnet droit s'étendant longitudinalement depuis le réservoir, notamment depuis la face arrière du réservoir, jusqu'à la traverse d'absorption de chocs.

Le réservoir peut être obtenu en matériaux composites et peut comprendre des trous traversant, notamment selon la direction longitudinale et/ou transversale et/ou verticale, les trous traversant pouvant permettre la fixation de la colonnette centrale, éventuellement par l'intermédiaire d'une embase s'étendant sensiblement dans un plan vertical et transversal, l'embase pouvant être alors fixée à une face arrière du réservoir s'étendant sensiblement dans un même plan.

L'invention porte encore sur un véhicule, notamment un véhicule automobile, comprenant un agencement tel que défini précédemment.

L'invention porte encore sur un procédé d'assemblage d'un agencement tel que défini précédemment, le procédé comprenant une étape de fourniture :
- d'une partie de caisse pour un véhicule, la partie de caisse comprenant un réservoir, une traverse d'absorption de chocs et une colonnette centrale, la colonnette centrale comprenant un moyen de fixation pour un crochet d'attelage, le moyen de fixation comprenant un taraudage,
- d'un crochet d'attelage comprenant une partie filetée,
suivie d'une étape de fixation du crochet d'attelage par vissage de la partie filetée du crochet d'attelage dans le taraudage du moyen de fixation, éventuellement en utilisant les bras droit et gauche en tant que bras de levier pour faciliter le vissage, les bras droit et gauche étant alors pivotés de sorte à ne pas interférer avec la traverse d'absorption de chocs au cours du vissage.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue schématique de profil d'un véhicule automobile selon un mode de réalisation de l'invention.
La figure 2 est une vue en perspective d'un agencement selon un mode de réalisation de l'invention.
La figure 3 est une vue de dessous en coupe selon un plan transversal et longitudinal passant par l'axe d'un filetage de fixation d'un crochet d'attelage de l'agencement selon le mode de réalisation de l'invention.
La figure 4 est une vue de détail en coupe, selon un plan médian vertical et longitudinal M du véhicule, de l'agencement selon le mode de réalisation de l'invention.
La figure 5 est une vue en perspective de l'agencement selon le mode de réalisation de l'invention.
La figure 6 est une vue en perspective de l'agencement selon le mode de réalisation de l'invention, un crochet d'attelage de type boule étant en cours de montage.
La figure 7 est une vue en coupe selon le plan médian M de l'agencement selon le mode de réalisation de l'invention, un crochet d'attelage de type col de cygne étant en cours de montage.
La figure 8 est une vue en perspective de l'agencement selon le mode de réalisation de l'invention, le crochet d'attelage de type col de cygne étant en cours de montage.
La figure 9 est une vue en perspective de l'agencement selon le mode de réalisation de l'invention, un anneau de remorquage étant en cours de montage en lieu et place d'un crochet d'attelage.

### Description détaillée

La direction selon laquelle un véhicule, notamment un véhicule automobile, se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule se déplace habituellement dans la direction longitudinale et est opposé au sens arrière.

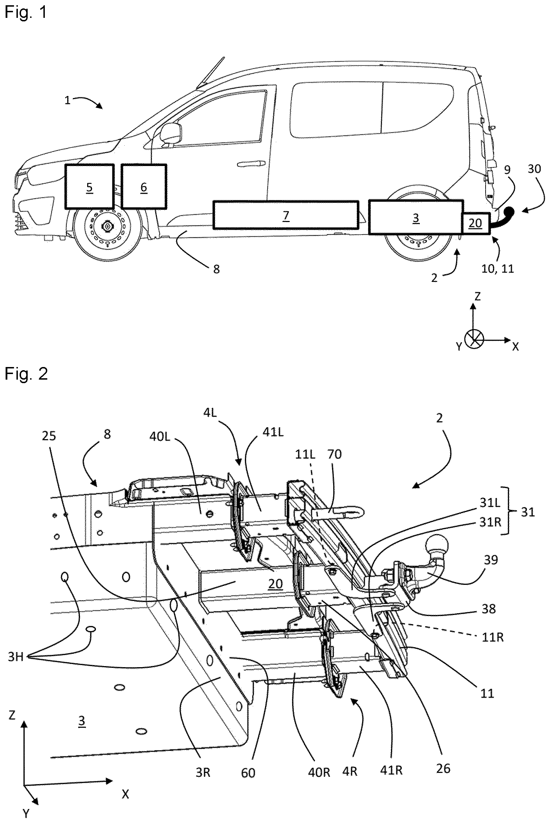

Comme illustré sur la figure 1, un véhicule 1, de préférence un véhicule automobile, ou un agencement 2, comprend un réservoir 3 selon un mode de réalisation de l'invention. Le réservoir 3 est destiné à contenir un fluide énergétique, c'est-à-dire un fluide formant une réserve d'énergie convertible en une force apte à déplacer le véhicule. Le réservoir 3 est donc un organe du véhicule 1 qui lui confère une certaine autonomie. Le réservoir comprend notamment une ouverture d'entrée permettant de remplir le réservoir avec un fluide énergétique et une ouverture de sortie pour délivrer puis consommer le fluide énergétique contenu dans le réservoir.

Selon un mode de réalisation préféré, le réservoir 3 est destiné à stocker de l'hydrogène ou plus précisément du dihydrogène. Le véhicule 1 comprend alors de préférence une pile à combustible 5 apte à transformer de l'hydrogène en un courant électrique et un moteur électrique 6 alimenté en énergie par un courant électrique issu de la pile à combustible 5. Le véhicule 1 peut également comprendre une batterie électrochimique 7, par exemple de type lithium-ion. La batterie électrochimique 7 peut être rechargée par un courant électrique issu de la pile à combustible 5 et/ou par une connexion à un réseau de distribution d'électricité. Le moteur électrique 6 peut aussi être alimenté en énergie par un courant électrique issu de la batterie électrochimique 7. Le réservoir 3 associé à la pile à combustible 5 peut ainsi faire fonction de prolongateur d'autonomie du véhicule, lorsque la batterie électrochimique 7 est déchargée.

En variante, l'architecture du véhicule 1 pourrait être différente. Le véhicule 1 pourrait ne pas comprendre de batterie électrochimique, de sorte que le réservoir 3 constitue l'unique source d'énergie du véhicule 1. Selon une autre variante, le véhicule pourrait comprendre un moteur à combustion interne alimenté en énergie par de l'hydrogène au lieu d'une pile à combustible. Selon d'autres variantes, le réservoir 3 pourrait être configuré pour stocker d'autres formes de gaz énergétiques, par exemple du gaz de pétrole liquéfié ou du gaz naturel. Le réservoir 3 pourrait même être destiné à stocker un carburant liquide tel que de l'essence, du gazole ou encore de l'éthanol.

Le réservoir 3 est avantageusement destiné à stocker un fluide énergétique sous pression, c'est-à-dire à une pression strictement supérieure à la pression atmosphérique. En l'espèce, le réservoir 3 est destiné à stocker le fluide énergétique, notamment de l'hydrogène, à une pression supérieure ou égale à 700 bars. En variante, le réservoir 3 pourrait être destiné à stocker le fluide énergétique à une pression différente, par exemple une pression supérieure ou égale à 300 bars, ou 500 bars, ou 1000 bars, ou encore toute autre valeur. Le réservoir 3 comprend ainsi une structure rigide apte à supporter les efforts exercés par le fluide sous pression qu'il contient, c'est-à-dire des efforts centrifuges agissant depuis l'intérieur du réservoir 3 et qui tendent à le faire éclater. En outre, le réservoir peut avoir une contenance supérieure ou égale à 50 litres, de préférence supérieure ou égale à 100 litres, voire même supérieure ou égale à 150 litres. La structure du réservoir est également apte à supporter des chocs importants, notamment des chocs se produisant en cas d'accident du véhicule 1, sans générer de fuite du fluide énergétique vers l'extérieur. Les données d'accidentologie et/ou des simulations et/ou des crash test permettent de dimensionner la structure, notamment des épaisseurs de parois requises, de sorte qu'aucune fuite de fluide énergétique ne se produise, même pour les accidents les plus violents. Comme illustré sur la figure 2, le réservoir 3 comprend typiquement une forme globalement parallélépipédique. Dans cet exemple, il comprend trois paires de parois opposées. Une première paire de parois opposées est composée d'une paroi avant (non illustrée) et d'une paroi arrière 3R. Les parois avant et arrière s'étendent sensiblement parallèlement aux axes Y et Z. Une deuxième paire de parois opposées est composée d'une paroi latérale gauche et d'une paroi latérale droite s'étendant sensiblement parallèlement aux axes X et Z. Une troisième paire de parois opposées est composée d'une paroi supérieure et d'une paroi inférieure s'étendant sensiblement parallèlement aux axes X et Y. En variante (non représentée), toute autre forme du réservoir pourrait être envisagée. Avantageusement, le réservoir 3 est agencé en partie arrière du véhicule. Surtout, le réservoir 3 forme une partie arrière d'un châssis 8 du véhicule 1, par exemple une partie arrière du soubassement du véhicule.

Le réservoir 3 dont il est question dans l'invention est typiquement un réservoir structurel polymorphe réalisé en matériaux composites à partir d'un procédé de tissage analogue à celui qui est présenté dans le document FR 2 888 915 A1. Ce réservoir comprend des puits de renforcement internes qui traversent le volume intérieur du réservoir et qui relient deux à deux des parois opposées du réservoir 3 de façon à les arrimer ensemble. Cette structure et cette géométrie assurent un maintien mécanique du réservoir adapté à recevoir des gaz à forte pression, en particulier pour contenir de l'hydrogène. Le réservoir étant rigide, il est de ce fait utilisé comme élément structurel du véhicule, en complément des éléments de structure classiques du soubassement du véhicule.

Le réservoir 3 comprend des trous traversant 3H, par exemple des trous 3H s'étendant selon plusieurs directions, par exemple selon la direction longitudinale et/ou selon la direction transversale et/ou selon la direction verticale. Avantageusement, chaque trous 3H comprend un insert, par exemple un insert en forme de tube, de préférence métallique, de sorte à rigidifier la structure du réservoir 3 en traversant de part en part le réservoir, de préférence en rejoignant deux parois d'une même paire de parois opposées. De préférence, comme illustré sur la figure 2, le véhicule 1, ou le châssis 8, comprend une embase 60 s'étendant sensiblement dans un plan vertical et transversal. De préférence, l'embase 60 est fixée à la face ou paroi arrière 3R du réservoir 3. De préférence, la fixation de l'embase 60 est assurée par des moyens de fixation traversant des trous 3H s'étendant selon la direction longitudinale. A noter que les trous traversant 3H ne sont illustrés schématiquement que sur la figure 2 afin de ne pas surcharger les autres figures.

L'agencement 2 comprend une traverse d'absorption de chocs 11. La traverse 11 est de préférence fixée par l'intermédiaire d'éléments de structure au réservoir 3. De préférence, comme illustré sur les figures 2, 3, 5, 6, 7, 8 et 9, la traverse 11 est agencée derrière le réservoir 3. La traverse d'absorption de chocs 11 est de préférence de type poutre en acier et/ou en alliage d'aluminium. La traverse 11 s'étend transversalement ou sensiblement transversalement, par exemple en formant une légère courbe, le côté concave de la courbe étant orienté vers l'avant du véhicule de sorte à maximiser l'absorption d'énergie lors d'un choc venant de l'arrière. Ainsi, de préférence, la traverse 11 est agencée au sein d'un pare-chocs arrière 9 du véhicule 1 illustré schématiquement sur la figure 1. De préférence, des éléments amortissants, par exemple en forme de nid d'abeille, s'étendent au sein du volume interne du pare-chocs, c'est-à-dire entre la traverse 11 et la coque du pare-chocs. En effet, de préférence, le pare-chocs est de type coque creuse. Par exemple, l'ensemble comprenant la traverse 11, les éléments amortissant (non illustrés) et le pare-chocs arrière 9 constitue un dispositif d'absorption de chocs 10 pour des chocs venant de l'arrière ou sensiblement de l'arrière, par exemple des chocs latéraux arrière.

De préférence, comme illustré sur la figure 2 notamment, l'agencement 2 comprend encore un longeronnet gauche 4L, c'est-à-dire un morceau de longeron, un longeron court, s'étendant longitudinalement depuis le réservoir 3 et un longeronnet droit 4R, c'est-à-dire un morceau de longeron, un longeron court, s'étendant longitudinalement depuis le réservoir 3. Chaque longeronnet 4L, 4R s'étend jusqu'à la traverse d'absorption de chocs 11 et est fixé à la traverse 11. De préférence, chaque longeronnet 4L, 4R s'étend depuis la face arrière 3R du réservoir jusqu'à la traverse 11, par exemple en étant fixé à l'embase 60, l'embase 60 étant fixée au réservoir 3 comme vu précédemment. Par exemple, chaque longeronnet est un corps creux et la section de chaque longeronnet dans un plan vertical et transversal est carrée ou rectangulaire.

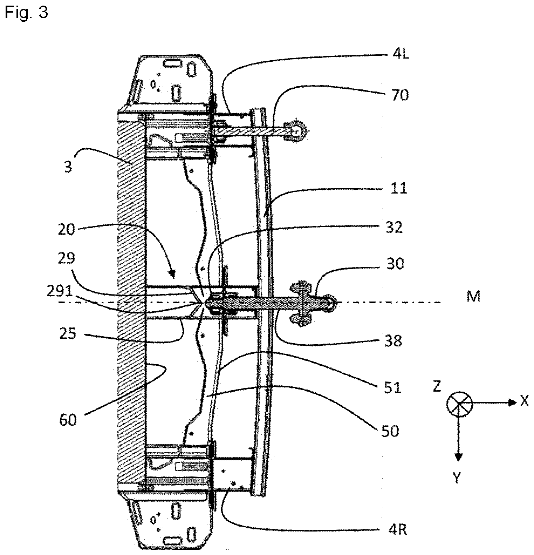

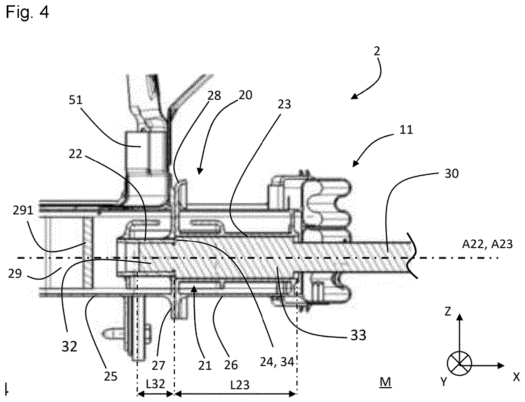

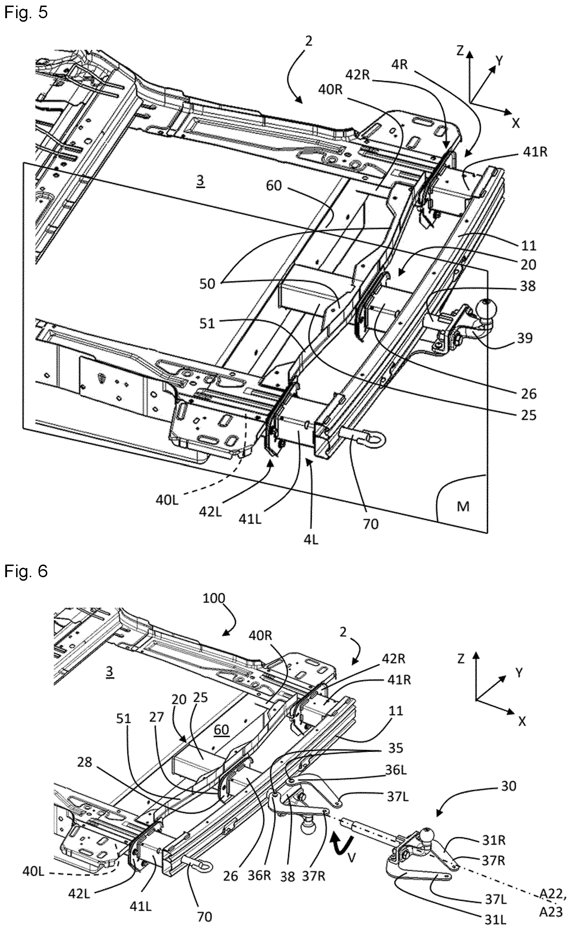

L'agencement 2 comprend encore une colonnette centrale 20. La colonnette centrale 20, par exemple de type morceau de poutre ou poutrelle, s'étend longitudinalement en étant sensiblement centrée par rapport à un plan médian M du véhicule 1 illustré sur les figures 3 et 5. Par exemple, la poutrelle 20 est un corps creux et la section de la poutrelle 20 dans un plan vertical et transversal est carrée ou rectangulaire. La colonnette centrale 20 comprend un moyen de fixation 21 pour un crochet d'attelage 30 qui sera détaillé par la suite en particulier en référence à la figure 4.

De préférence, comme illustré notamment sur les figures 5 et 6, le véhicule 1, ou le châssis ou le soubassement 8 du véhicule 1, ou l'agencement 2, ou encore le pare-chocs arrière 9, comprend un renfort 50. Le renfort 50 s'étend de préférence principalement dans un plan transversal et longitudinal, éventuellement en formant une courbe, sensiblement proche de celle formée par la traverse 11 par exemple. Avantageusement, le renfort 50 comprend une extension 51 s'étendant verticalement ou sensiblement verticalement vers le haut. Par exemple, le renfort 50 est obtenu dans la même matière que les longeronnets et la colonnette, par exemple en alliage d'aluminium et/ou en acier. De préférence, le renfort 50 est fixé à chaque longeronnet 4R, 4L et à la colonnette centrale 20. De préférence, la fixation à ces trois éléments du châssis 8 est assurée par de la soudure.

De préférence, le renfort 50 est fixé respectivement à une partie avant de chaque longeronnet 4R, 4L et à une partie avant de la colonnette centrale 20. Dans ce cas, comme illustré en particulier sur la figure 5, chaque longeronnet 4R, 4L est en deux parties distinctes et comprend respectivement une partie avant 40R, 40L et une partie arrière 41R, 41L. La colonnette centrale 20 est alors également en deux parties et comprend une partie avant 25 et une partie arrière 26. Avantageusement, comme illustré sur la figure 6, la partie avant 25 de la colonnette centrale 20 comprend une platine avant 27, ou plaque de jonction, et la partie arrière 26 de la colonnette centrale 20 comprend une platine arrière 28, ou plaque de jonction. De préférence, chaque platine 27 ; 28 s'étend sensiblement dans un plan vertical et transversal. De préférence encore, chaque platine 27 ; 28 est percée de sorte à permettre leur fixation l'une par rapport à l'autre par au moins un boulon, ou une platine est munie d'au moins un écrou rapporté ou d'au moins une tige filetée rapportée de sorte à permettre la fixation de l'une avec l'autre par vissage. Ainsi, la partie avant 25 de la colonnette 20 et la partie arrière 26 de la colonnette 20 sont fixées l'une à l'autre de manière démontable. De préférence, le renfort transversal 50 est fixé, par exemple par soudure, uniquement sur la partie avant 25 de la colonnette centrale 20.

Dans ce cas, chaque partie avant 40R, 40L et chaque partie arrière 41R, 41L, respectivement de chaque longeronnet 4R, 4L comprend une jonction 42R, 42L du même type, c'est-à-dire via des plaques ou platines, de préférence boulonnées entre elles, de sorte à permettre la fixation de chaque partie arrière 41R, 41L à chaque partie avant 40R, 40L de chaque longeronnet 4R, 4L. De préférence, le renfort transversal 50 est fixé, par exemple par soudure, uniquement sur chaque partie avant 40R, 40L de chaque longeronnet 4R, 4L, comme illustré sur la figure 5, ou au niveau de chaque partie avant 40R, 40L en cas d'élément et/ou pièce intercalée entre le renfort 50 et la partie avant respective 40R, 40L. Ainsi, chaque longeronnet est de préférence en deux parties et la colonnette centrale est également en deux parties démontables l'une de l'autre.

Avantageusement, les trous traversant 3H du réservoir 3 sont utilisés pour la fixation de la colonnette centrale 20 sur le, par rapport au, réservoir, tout du moins pour la fixation de l'embase 60 fixée au réservoir 3 comme évoqué précédemment. Dans ce cas, la colonnette centrale 20 est fixée à l'embase 60. Plus précisément, la première partie ou partie avant 25 de la colonnette 20 est fixée à l'embase 60, de préférence par soudage. Autrement dit, dans ce cas, la partie avant 25 de la colonnette 20 fait par exemple partie de l'embase 60.

De préférence, comme illustré en particulier sur la figure 4, le moyen de fixation 21 comprend un taraudage 22 ménagé dans la colonnette centrale 20. Par exemple, le taraudage 22 est ménagé dans la partie avant 25 de la colonnette. Par exemple, le taraudage 22 est ménagé dans la platine avant 27. A cet effet, la platine avant 27 comprend une extension vers l'avant, par exemple s'étendant au sein de la section creuse de la partie avant 25. De préférence, le taraudage 22 a un axe A22 s'étendant longitudinalement ou sensiblement longitudinalement. Par exemple, le moyen de fixation 21 comprend encore un alésage de centrage 23 ménagé au sein de la colonnette centrale 20. Par exemple, l'alésage de centrage 23 est ménagé dans la partie arrière 26 de la colonnette centrale 20. Par exemple, l'alésage de centrage 23 est ménagé dans la platine arrière 28 de la colonnette. A cet effet, la platine arrière 28 comprend une extension vers l'arrière, par exemple s'étendant au sein de la section creuse de la partie arrière 26. De préférence, l'alésage de centrage 23 a un axe A23 confondu ou sensiblement confondu avec l'axe A22 du taraudage 22. Ainsi, par exemple, ce sont les platines avant et arrière 27, 28 qui comprennent le moyen de fixation 21 pour un crochet d'attelage 30. Par exemple, l'alésage de centrage 23 s'étend sur une longueur L23 comprise entre 20 mm et 200 mm. Par exemple, la longueur L32 d'une partie filetée 32 du crochet 30 s'étend sur 20 mm à 60 mm. Dans cette configuration, le diamètre de l'alésage de centrage 23 est supérieur au diamètre de la partie filetée 32, la partie filetée 32 traversant l'alésage de centrage 23 avant son insertion dans le taraudage 22. Par exemple, le diamètre de la partie filetée 32 est compris entre 20 mm et 30 mm. Par exemple, la longueur de filetage est comprise entre 20 mm et 40 mm.

Alternativement, le taraudage est ménagé dans la partie arrière de la colonnette, par exemple dans la platine arrière. Par exemple, dans ce cas, l'alésage de centrage est ménagé dans la partie avant, par exemple dans la platine avant. Dans cette configuration non illustrée, le diamètre de l'alésage de centrage est inférieur au diamètre de la partie filetée.

De préférence, l'agencement 2 comprend encore un crochet d'attelage 30. Le crochet d'attelage 30 comprend une partie cylindrique 33 destinée à se centrer par rapport à, dans, l'alésage de centrage 23. Le crochet d'attelage comprend encore la partie filetée 32 coopérant avec le taraudage 22. De préférence encore, comme illustré sur la figure 2 notamment, le crochet d'attelage 30 comprend un corps principal 38 et un moyen de maintien 31 pour maintenir en position le corps principal 38 par rapport à la traverse d'absorption de chocs 11. Le crochet 30 peut comprendre encore une « boule » 39, par exemple fixée sur le corps principal 38 par l'intermédiaire de deux boulons. De préférence, le corps principal 38 comprend la partie filetée 32 et la partie cylindrique 33.

Plus précisément, le moyen de maintien 31 comprend un bras droit 31R. Comme illustré sur la figure 6, le bras droit 31R comprend une première extrémité 36R. Le bras droit 31R est monté pivotant au niveau de la première extrémité 36R du bras droit 31R par rapport au corps principal 38. Le moyen de maintien 31 comprend encore un bras gauche 31L. Le bras gauche 31L comprend une première extrémité 36L. Le bras gauche 31L est monté pivotant au niveau de la première extrémité 36L du bras gauche 31L par rapport au corps principal 38. De préférence, chaque pivot 35 entre un bras et le corps principal 38 est non démontable, par exemple obtenu notamment avec un rivet inséré avec jeu sur le bras et/ou sur le corps principal. Le bras droit 31R comprend une deuxième extrémité 37R. Le bras droit 31R est fixé à la traverse d'absorption de chocs 11 au niveau de la deuxième extrémité 37R du bras droit 31R. Le bras gauche 31L comprend une deuxième extrémité 37L. Le bras gauche 31L est fixé à la traverse d'absorption de chocs 11 au niveau de la deuxième extrémité 37L du bras gauche 31L. Pour ce faire, de préférence, la traverse d'absorption de chocs 11 comprend un perçage droit 11R et un perçage gauche 11L, comme illustré sur la figure 2. Ainsi, la deuxième extrémité 37R du bras droit 31R est fixée au niveau du perçage droit 11R, par exemple par un système vis-écrou, par exemple de type boulon. La deuxième extrémité 37L du bras gauche 31L est fixée au niveau du perçage gauche 11L de la traverse, par exemple par un système vis-écrou, par exemple de type boulon.

Comme illustré sur les figures 2, 6 et 8, le bras droit 31R et le bras gauche 31L sont courbés et/ou pliés entre leur première extrémité 36R ; 36L et leur deuxième extrémité 37R ; 37L respective. Avantageusement, cette courbe, ou ce pli, présente, crée un angle droit, ou sensiblement un angle droit à chaque bras. De manière générale, chaque bras a ainsi une forme de L, par exemple de L plat s'étendant dans un plan transversal et longitudinal une fois fixé sur la traverse 11.

Comme illustré sur les figures 3, 4 et 7, l'agencement 2, tout du moins la colonnette centrale 20, comprend un moyen de déviation 29 en cas de choc venant de l'arrière du véhicule et engendrant une avancée du crochet d'attelage 30, ou d'un anneau de remorquage 70 fixé au moyen de fixation 21 le cas échéant. De préférence ce moyen de déviation 29 est un V, par exemple ayant sensiblement une forme de cornière s'étendant verticalement, une jonction 291 entre les deux ailes de la cornière étant sensiblement centrée par rapport au plan médian M du véhicule. De préférence, la jonction ou le fond du V s'étendant verticalement. Par exemple, la cornière est fixée au sein de la colonnette 20, par exemple en étant soudée à la partie avant 25 de la colonnette, par exemple via des points de soudure par points. Comme illustré sur la figure 3, les ailes de la cornière s'étendent alors vers l'avant du véhicule de sorte qu'en cas de choc faisant avancer la partie filetée 32 et la partie cylindrique 33, la partie filetée 32 est déviée à droite ou à gauche en glissant contre une des deux ailes de la cornière. Avantageusement, l'extrémité de la partie filetée 32 du crochet est arrondie et/ou conique de sorte à faciliter le changement de direction (vers la droite ou vers la gauche) lors du contact contre la jonction 291 entre les deux ailes de la cornière le cas échéant.

Alternativement encore, la jonction de la cornière, peut s'étendre transversalement de sorte à diriger le filetage du crochet vers le bas ou vers le haut en cas de choc.

Alternativement encore, une simple tôle agencée verticalement au sein de la colonnette centrale, par exemple orientée à 45 degrés par rapport au plan médian M du véhicule, fait dévier le crochet forcément d'un seul côté, c'est-à-dire vers la droite ou vers la gauche, en cas de choc faisant avant le crochet d'attelage 30. Alternativement, la tôle s'étend de sorte à monter en direction de l'arrière afin de diriger vers le bas le crochet en cas de choc arrière, ou la tôle s'étend de sorte à descendre en direction de l'arrière afin de diriger vers le haut le crochet en cas de choc arrière. Quoi qu'il en soit, l'objectif est d'empêcher que la partie filetée 32 et/ou la partie cylindrique 33 endommage le réservoir 3 en le percutant en cas de choc violent arrière, bien que la structure du réservoir soit particulièrement rigide.

Un mode d'exécution d'un procédé d'assemblage de l'agencement va maintenant être décrit notamment en référence aux figures 6, 7 et 8.

Le procédé d'assemblage de l'agencement 2 comprend une étape de fourniture d'une partie de caisse 100 pour un véhicule 1.

Plus précisément, la partie de caisse 100 comprend le réservoir 3. La partie de caisse 100 comprend encore la traverse d'absorption de chocs 11. La partie de caisse 100 comprend encore la colonnette centrale 20 comprenant le moyen de fixation 21 pour le crochet d'attelage 30. Pour rappel, le moyen de fixation 21 comprend au moins le taraudage 22.

L'étape de fourniture comprend également la fourniture du crochet d'attelage 30. Le crochet d'attelage 30, notamment son corps principal 38, comprend la partie filetée 32.

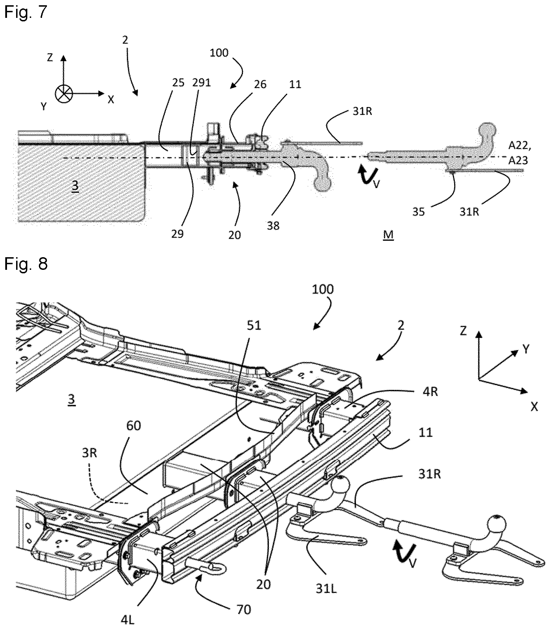

Ensuite, au procède à une étape de fixation du crochet d'attelage 30 par vissage de la partie filetée ou vis 32 du crochet d'attelage 30 dans le taraudage 22 du moyen de fixation 21 (voir la figure 4 notamment). Dans le cas de crochet d'attelage muni du moyen de maintien 31, en particulier comprenant le bras droit 31R et le bras gauche 31L, chaque bras comprend respectivement la première extrémité 36R, 36L montée pivotante par rapport au corps principal 38 du crochet 30 comme illustré sur la figure 6. A noter que sur les figures 6, 7 et 8, le crochet 30 est illustré une première fois à droite, dissocié de la partie de caisse 100, avant la fixation sur la partie de caisse 100, et une deuxième fois fixé à la colonnette après ou en fin de vissage. Grâce à leur montage avec pivot, chaque bras peut être déployé de sorte à s'étendre radialement, ou sensiblement radialement, par rapport à au moins un des deux axes A22, A23, notamment de sorte que les deuxièmes extrémités 37R, 37L s'étendent loin des axes A22, A23. Dans cette configuration où les deux bras 31R, 31L s'étendent sensiblement radialement par rapport aux axes A22, A23, les deux bras offrent des bras de levier conséquents pour faciliter le vissage de la partie filetée 32 du crochet 30 dans le taraudage 22 de la colonnette centrale. A noter que le vissage autour de l'axe A22 de la partie filetée, ou vis, 32 du crochet 30 dans le taraudage 22 du moyen de fixation 21 est illustré par une flèche courbée V sur les figures 6, 7 et 8. A noter que sur les figures 6 et 7, le crochet illustré à gauche nécessite un demi-tour de vissage, ou de dévissage, pour se retrouver en position correcte et permettre la fixation des bras.

Ainsi, on utilise le cas échéant au moins un des deux bras, voire les deux bras 31R, 31L pour visser le crochet, plus précisément sa partie filetée 32 dans le taraudage 22 de la colonnette centrale 20. Evidemment, les bras droit et gauche 31R, 31L sont pivotés de sorte à créer des bras de levier et s'affranchir de tout outil ou clé, sans pour autant venir interférer avec la traverse d'absorption de chocs 11 au cours du vissage. Une fois le vissage réalisé sur une course conséquente, on visse ou on dévisse de sorte que les bras soient agencés de manière que l'axe de chaque pivot 35 s'étende sensiblement verticalement, et de sorte que le crochet soit orienté vers le haut comme illustré sur les figures 1, 2, 3, 5 et 8. Il ne reste alors qu'à fixer, de préférence via des boulons, les deuxièmes extrémités 37R, 37L des bras 31R, 31L par rapport à la traverse 11, via les trous 11R, 11L ménagés dans celle-ci. A noter que la coopération de la partie cylindrique 33 du crochet avec l'alésage 23 facilite le vissage de la vis 32 dans le taraudage 22. De préférence, un jeu est prévu entre le cylindre 33 et l'alésage 23 de sorte à ne pas entraver le vissage de la vis 32 dans la colonnette.

De préférence, le jeu au fond de l'alésage de centrage est rattrapé grâce à un moyen de rattrapage de jeu afin de permettre un serrage du crochet sans jeu au sein du couple vis 32 / taraudage 22. En outre, le moyen de rattrapage de jeu permet de faire coïncider angulairement la partie filetée 32 avec le taraudage pour que les bras se retrouvent correctement vis-à-vis de la traverse 11 ce qui facilite la fixation entre les bras et la traverse. Par exemple, au moins une rondelle, par exemple élastique et de préférence piégée dans une gorge, est agencée au niveau d'un épaulement 34 du crochet d'attelage (voir figure 4) entre la partie cylindrique 33 et la partie filetée 32. Alternativement, ou en complément, au moins une rondelle, par exemple élastique et de préférence piégée dans une gorge, est agencée au niveau d'un épaulement 24 ménagé entre le taraudage 22 et l'alésage de centrage 23. La ou les rondelles ainsi piégées dans des gorges ne peuvent pas être perdues par l'utilisateur.

Pour le démontage, on procède dans l'ordre inverse. Ainsi, on démonte les bras 31R, 31L depuis la traverse 11. Grâce au montage en pivot des bras par rapport au corps principal 38, on oriente les bras selon les besoins et la place disponible. On dévisse ensuite la partie filetée 32 par rapport au taraudage 22, par exemple en utilisant les bras comme des bras de levier. A l'issue du dévissage, on extrait l'intégralité du crochet d'attelage et on le stocke jusqu'à la prochaine utilisation. Eventuellement, le cas échéant, on place un capot au sein du trou ménagé dans le pare-chocs 9 pour l'insertion du crochet afin d'obtenir une finition soignée du pare-chocs.

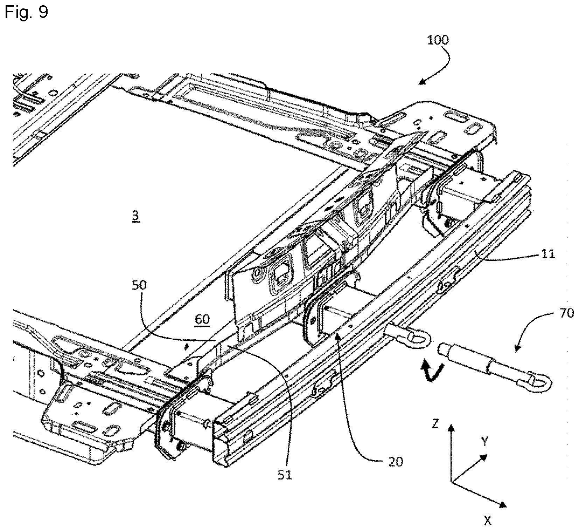

Comme illustré sur la figure 9, en l'absence de crochet d'attelage fixé au niveau de la colonnette 20, on peut profiter du moyen de fixation 21, tout du moins du taraudage 22, pour fixer un anneau de remorquage 70. Avantageusement, un moyen de rattrapage de jeu peut être prévu de sorte à éviter un jeu au niveau du filetage entre la vis de l'anneau 70 et le taraudage 22. Grâce à cette possibilité offerte par le moyen de fixation du crochet d'attelage, on peut s'affranchir d'avoir un ancrage latéral (à gauche et/ou à droite) pour un anneau de remorquage et, le cas échéant, un capot couvrant un orifice du pare-chocs en vis-à-vis d'un tel ancrage latéral. En outre, l'ancrage central offert par la présence du moyen de fixation de la colonnette centrale facilite et sécurise le remorquage d'un véhicule. En effet, un ancrage central est alors plus facile à utiliser qu'un ancrage latéral, en particulier quand l'ancrage latéral avant du véhicule à remorquer est du côté opposé à celui du véhicule tractant, la barre de remorquage s'étendant sensiblement à 45 degrés dans un plan sensiblement transversal et longitudinal. Un tel remorquage réduit la distance entre les deux véhicules, ce qui n'est pas recommandé en termes de tenue de route et/ou de sécurité. Ainsi, la solution évite un tel inconvénient lors d'un remorquage.

Eventuellement, bien que la colonnette centrale permette de fixer l'anneau de remorquage 70, au moins une fixation latérale pour un remorquage est conservée, par exemple dans le cas de véhicules utilitaires, davantage exposés à s'ensabler, s'embourber ou encore pour des véhicules dont l'esthétique revêt une importance moindre.

En résumé, la solution porte sur la fixation d'un attelage directement sur le châssis ou soubassement 8 d'un véhicule à la manière d'un anneau de remorquage, c'est-à-dire via un simple vissage. En effet, le châssis, via le réservoir et toute une structure arrière dont la traverse 11 et la colonnette centrale 26 assure la fixation du crochet d'attelage spécifique. La solution est adaptée à un véhicule ayant une structure rigide arrière, en particulier une structure renforcée par l'intégration dans cette structure arrière du réservoir 3, notamment haute pression, qui est structurel eu égard au châssis du fait de sa robustesse. En effet, la présence du réservoir 3 intégrée au châssis 8 rigidifie la structure arrière du véhicule. Ainsi, il devient possible d'ajouter la colonnette ou longeronnet central 20, au niveau du plan médian du véhicule de sorte à offrir un attelage à montage extrêmement rapide. A noter que le centrage 23 associé à la partie cylindrique 33 du crochet confère également davantage de robustesse et participe à rendre le crochet solidaire de la structure arrière.

En effet, grâce à la solution, comme vu précédemment, le montage de l'attelage se résume au montage du crochet d'attelage 30. Pour le montage du crochet, il n'y a aucunement besoin de démonter la partie arrière du véhicule comprenant un bouclier et des pattes de maintien, des blocs chocs par exemple de type nid d'abeilles, des bouchons sur des longerons, des supports d'une ligne d'échappement voire encore des plastiques sous coffre et des passages de roues, ce qui est long et fastidieux. En effet, grâce à la solution, l'attelage ne comprend pas de renforts latéraux à monter sur les longerons. Ainsi, il n'y a pas besoin de fixer des éléments sous le véhicule. Il n'y a donc pas de fixation de gros boulons qui nécessitent de gros outillages sous le véhicule. Enfin, aucune modification du véhicule, telle que par exemple une découpe du pare-chocs, n'est nécessaire pour le passage du crochet. On s'affranchit donc d'une intervention au sein d'un garage et par conséquent du coût d'une telle intervention.

Ainsi, on profite de la rigidité apportée par le réservoir 3 pour ajouter la colonnette centrale fixée directement, de préférence indirectement, au réservoir 3. En effet, comme vu précédemment, par exemple la colonnette est fixée par exemple à l'embase 60 elle-même fixée directement au réservoir 3. De préférence, une feuille ou protection de faible épaisseur est prévue entre l'embase 60 et le réservoir 3. En effet, l'embase 60 est par exemple en acier ou en alliage d'aluminium alors que le réservoir 3 est en matériaux composite ce qui engendre des fréquences de vibration différentes. Une telle feuille de protection vise à faire écran entre les deux pour éviter une usure de la surface externe du réservoir et/ou de la surface de l'embase 60 par des frottements issus des différences de fréquences de vibrations.

Ainsi, alors qu'un attelage de l'état de la technique reste à demeure sur le véhicule une fois monté, la solution permet de démonter le crochet aisément, sans outil afin de le stocker en dehors du véhicule. La solution permet donc d'alléger l'attelage puisqu'il ne comprend que le crochet d'attelage 30 comprenant de préférence le moyen de maintien 31. Ainsi, la masse de l'attelage est fortement diminuée ce qui abaisse la consommation de carburant du véhicule ainsi équipé et par conséquent abaisse sa production de CO2 et/ou augmente son autonomie en cas de véhicule électrique notamment.

Ainsi, la structure du châssis du véhicule comprend le réservoir 3 haute pression extrêmement rigide qui s'étend sur toute la largeur selon la direction transversale du châssis, les parties avant 40R, 40L des longeronnets latéraux s'étendant depuis le réservoir et remplaçant de préférence des longerons latéraux. La structure comprend la partie avant 25 du longeronnet central 20. Pour rappel, les trois longeronnets 40R, 40L, 25 (partie avant de la colonnette) sont structurels et montés directement sur le réservoir 3, ou via l'embase ou interface 60. De préférence, la coque du véhicule est soudée à ces éléments en tôlerie en plus du plancher en tôle par exemple. A l'extrémité arrière, c'est-à-dire au niveau des parties arrière 41R, 41L, 26, la traverse 11 pour les chocs s'étend transversalement en étant fixée à ces éléments, de préférence par soudage. Ainsi, les trois colonnettes ou parties arrière 41R, 41L, 26 sont de préférence boulonnées sur les parties avant 40R, 40L, 25 ce qui permet un démontage et un remplacement rapide en cas d'accrochage ne déformant que les parties arrière des longeronnets et la traverse 11. Ainsi, la réparation suite à un accident mineur est rapide, facile, et peu onéreuse. Aurtrement dit, grâce à la solution, la partie arrière des longeronnets 41R, 26, 41L est facilement interchangeable.

En outre, les trois longeronnets / colonnettes peuvent être fixés avec les mêmes entraxes selon la direction transversale pour plusieurs types ou gammes de véhicule car ils sont fixés par rapport au réservoir, voire sur le réservoir, et ne sont pas les prolongements de longerons s'étendant en partie centrale du véhicule. En cas d'utilisation du réservoir 3 pour plusieurs modèles c'est éventuellement tout l'agencement qui peut être transposé et utilisé pour plusieurs véhicules ayant pourtant de grandes différences en termes de soubassement.

Comme illustré sur la figure 9, la solution permet de monter un anneau de remorquage 70 en lieu et place du crochet d'attelage 30, tout simplement en le vissant à travers le bouclier arrière ou pare-chocs 9 comme c'est généralement le cas pour un anneau de remorquage. Ainsi, un utilisateur ou un dépanneur ou un personnel de secours peut aisément installer un anneau de remorquage, de manière intuitive, par exemple en déclipsant un bouchon ou capot dans le pare-chocs arrière si le crochet d'attelage n'est pas présent.

Pour rappel, la solution comprend un montage vissé dans le longeronnet central 20 avec une barre cylindrique 33 et un élément fileté 32 et au moins un bras 31R, 31L fixé sur la traverse 11, plus précisément dessous, permettant notamment l'arrêt en rotation du crochet par rapport à la colonnette. A noter que les bras 31R, 31L rigidifient le montage, la fixation entre le crochet 30 et le châssis. Les bras sont fixés à la traverse de préférence via des boulons nécessitant des outils de sorte à compliquer le démontage et éviter un vol aisé du crochet d'attelage.

Comme évoqué précédemment, les deux bras inférieurs, en forme de L, sont fixés à la partie principale ou corps principal 38 par des axes-rivets, non démontables, de sorte à permettre la rotation ou pivotement des bras pour les rassembler, les rabattre, lors du montage par vissage de la partie filetée 32 au sein du taraudage 22 de la colonnette 20, et pour les ouvrir, les déployer, lors du montage sur la traverse, en partie inférieure, par deux vis ou boulons.

En résumé, la partie filetée 32 du crochet 30 est vissée de façon rigide sur la structure du véhicule et les deux bras 31R, 31L créent des points de liaison, de préférence éloignés l'un de l'autre, par exemple à proximité des longeronnets latéraux 4R, 4L pour obtenir une bonne stabilité ainsi qu'un maintien de la boule 39 correctement orientée, c'est-à-dire vers le haut.

De préférence, la barre cylindrique du corps principal 38 comprend la partie cylindrique 33 guidée et centrée dans l'alésage 23 ménagé dans la colonnette centrale, l'alésage central étant par exemple un tube interne soudé. Comme évoqué précédemment, un moyen de déviation de la barre cylindrique du crochet est prévu à des fins de sécurité. Ainsi, en cas de choc important sur le crochet d'attelage 30, une patte ou tôle épaisse 29, par exemple en forme de V, par exemple soudée dans la colonnette 20, oriente le crochet, vers un côté, ou dans d'autres modes de réalisation non illustrés, vers le haut ou vers le bas. Pour rappel, à cette fin, l'extrémité avant du crochet, au niveau de la face avant du filetage 32, est avantageusement arrondie. On évite ainsi une perforation, tout du moins un endommagement, du réservoir 3 destiné de préférence à stocker du dihydrogène sous pression, potentiellement inflammable voire explosif.

Ainsi, la partie centrale de type barre, notamment cylindrique, rigide, robuste, du crochet d'attelage ne reste pas perpendiculaire à une face arrière du réservoir s'étendant dans un plan transversal et vertical lors d'un choc, on force cette barre à se rendre le plus parallèle possible à la face arrière du réservoir, de sorte à ne pas l'endommager lors d'un crash. De préférence, une ouverture ou orifice, dans le bouclier ou pare-chocs 9, pour le passage de la barre cylindrique du crochet 30 est similaire à celle destinée à un anneau de remorquage 70, c'est-à-dire avec un capuchon déclipsable et reclipsable.

En conclusion, l'utilisateur peut lui-même réaliser l'installation du crochet d'attelage puisqu'aucun démontage important ni montage important n'est nécessaire. En outre, le crochet d'attelage est très simple également à démonter, opération que l'utilisateur peut également faire lui-même s'il ne l'utilise pas pendant une longue période. Etant donné l'absence de grosse traverse en acier et de ses bras de renfort sur les longerons, la structure arrière n'est pas modifiée quand le crochet n'est pas monté. En outre, seuls des outils basiques, tels que des clés, sont utiles pour le montage / démontage des bras 31R, 31L, le vissage / dévissage de la partie filetée dans la colonnette étant aisée, en particulier en utilisant les bras comme bras de levier. L'utilisateur n'a qu'à démonter les deux vis ou boulons inférieures sur la traverse 11, plier les deux bras 31R, 31L vers lui, et tourner pour dévisser la partie filetée du taraudage pour retirer le crochet d'attelage entièrement. Ensuite il lui suffit de reclipser le capuchon de bouclier le cas échéant.

Eventuellement, un seul bras 31R ; 31L est prévu. En effet, un seul bras peut suffire au maintien en position de la partie filetée 32 du crochet par rapport au taraudage 22 du moyen de fixation dans la colonnette, en particulier en cas de moyen de maintien en position comprenant par exemple au moins une rondelle élastique au niveau de l'épaulement 24, 34.

En outre, bien que le mode de réalisation illustré porte sur une fixation des bras par contact des bras sous la traverse 11, c'est-à-dire au niveau d'une face de la traverse 11 en vis-à-vis du sol, alternativement, la fixation des bras peut se faire sur la traverse, c'est-à-dire sur une face agencée sur le dessus de la traverse. Alternativement encore, les bras 31R, 31L pourraient venir se fixer contre une face de la traverse 11 s'étendant sensiblement verticalement, soit à l'arrière, soit à l'avant de la traverse 11.

A noter qu'après démontage de ce crochet d'attelage, la structure arrière redevient entièrement d'origine. Ainsi, la structure est identique à sa configuration ayant permis les homologations pour les crashs, à la différence des structures des véhicules conservant un attelage monté sur les longerons et ayant des répercussions en termes de sécurité en cas de choc arrière. En effet, en cas d'attelage monté sur les longerons et/ou traverse du châssis, cette configuration n'est pas testée et n'est a fortiori pas homologuée.

Comme évoqué, aucune masse superflue demeure sur le véhicule, en particulier une fois le crochet démonté. En outre, le crochet démonté a un encombrement extrêmement réduit ce qui facilite son stockage entre deux utilisations.

A noter que la colonnette centrale 20, en particulier la partie arrière 26, est reliée à la traverse 11, au renfort transversal 50 et/ou à l'extension verticale 51 du renfort 50 qui sont eux fixés directement ou indirectement sur les longeronnets 4R, 4L, et enfin sur l'embase 60 fixée elle-même de préférence au réservoir 3. Ainsi, cet assemblage autour de la colonnette 20 supportant le moyen de fixation 21 du crochet d'attelage 30 est particulièrement rigide, solide, en particulier grâce à toutes ces liaisons, soudées et/ou boulonnées. En outre, cette rigidité est accrue le cas échéant par le ou les bras 31R ; 31L ajoutant une liaison directe entre le corps principal 38 du crochet et la traverse 11.

A noter que la solution est compatible avec les deux types de « boule » ou crochet généralement rencontrés, à savoir en deux parties avec plaque d'adaptation et deux boulons de fixation comme illustré sur les figures 2, 3, 5 et 6, et le type col de cygne illustré sur les figures 7 et 8.

Pour rappel, le moyen de fixation du crochet d'attelage peut servir au montage de l'anneau de remorquage 70 afin d'éviter une deuxième ouverture dans le bouclier et un deuxième bouchon clipsable de fermeture. En outre, on améliore le design du pare-chocs arrière puisqu'une seule ouverture ou découpe centrée, et donc un seul capuchon centré au milieu du bouclier, suffisent pour les deux fonctions distinctes.

Dans une variante du mode de réalisation non illustrée, davantage de longeronnets sont agencés à l'arrière, par exemple au nombre de quatre dont deux longeronnets de part et d'autre du plan médian M et à proximité de ce plan M. Dans ce cas, le crochet d'attelage comprend une traverse sur laquelle est fixée la boule, par exemple par soudage. Le crochet, plus précisément la traverse du crochet, se fixe alors sur les deux barres cylindriques s'étendant longitudinalement, chaque barre étant vissée à l'intérieur de chaque longeronnets agencé de part et d'autre et à proximité du plan médian M. Eventuellement, le crochet comprend les deux bras en L.

L'invention est particulièrement adaptée à un véhicule, notamment automobile, et peut être utilisée pour un camion, un bus, un car, un engin agricole, un engin de levage et tout autre engin ayant un réservoir arrière structurel et rigide.

## Revendications

1. Agencement (2) pour un véhicule (1) comprenant :
- un réservoir (3) destiné à stocker un fluide énergétique, le réservoir (3) comprenant une structure rigide destinée à former une partie d'une structure d'un soubassement (8) d'un tel véhicule (1), le réservoir (3) comprenant une face arrière (3R) s'étendant selon un plan vertical et transversal ou sensiblement vertical et transversal,
- un premier élément (11) de type traverse d'absorption de chocs s'étendant transversalement et étant agencé derrière le réservoir (3),
- un deuxième élément (20) de type colonnette centrale s'étendant longitudinalement entre la face arrière (3R) du réservoir (3) et la traverse (11), la colonnette centrale (20) étant sensiblement centrée par rapport à un plan médian (M) d'un tel véhicule (1), et comprenant un moyen de fixation principal (21) destiné à la fixation d'un crochet d'attelage (30).

2. Agencement (2) selon la revendication précédente, **caractérisé en ce que** le moyen de fixation (21) comprend un taraudage (22) ménagé dans la colonnette centrale (20), notamment un taraudage (22) ayant un axe (A22) s'étendant longitudinalement.

3. Agencement (2) selon la revendication précédente, **caractérisé en ce que** le moyen de fixation (21) comprend un alésage de centrage (23) ménagé au sein de la colonnette centrale (20), notamment un alésage de centrage (23) ayant un axe (A23) confondu ou sensiblement confondu avec l'axe (A22) du taraudage (22).

4. Agencement (2) selon la revendication précédente, **caractérisé en ce que** l'agencement (2) comprend en outre un crochet d'attelage (30), le crochet d'attelage (30) comprenant une partie cylindrique (33) se centrant par rapport à l'alésage de centrage (23) et une partie filetée (32) coopérant avec le taraudage (22).

5. Agencement (2) selon la revendication précédente, **caractérisé en ce que** le crochet d'attelage (30) comprend un corps principal (38) et un moyen de maintien (31) pour maintenir en position le corps principal (38) par rapport à la traverse d'absorption de chocs (11).

6. Agencement (2) selon la revendication précédente, **caractérisé en ce que** le moyen de maintien (31) comprend un bras droit (31R) monté pivotant au niveau d'une première extrémité (36R) du bras droit (31R) par rapport au corps principal (38) et un bras gauche (31L) monté pivotant au niveau d'une première extrémité (36L) du bras gauche (31L) par rapport au corps principal (38).

7. Agencement (2) selon la revendication précédente, **caractérisé en ce que** le bras droit (31R) est fixé à la traverse d'absorption de chocs (11) au niveau d'une deuxième extrémité (37R) du bras droit (31R) et **en ce que** le bras gauche (31L) est fixé à la traverse d'absorption de chocs (11) au niveau d'une deuxième extrémité (37L) du bras gauche (31L).

8. Agencement (2) selon la revendication précédente, **caractérisé en ce que** la traverse d'absorption de chocs (11) comprend un perçage droit (11R) et un perçage gauche (11L), la deuxième extrémité (37R) du bras droit (31R) étant fixée au niveau du perçage droit (11R), notamment par un système vis-écrou, et la deuxième extrémité (37L) du bras gauche (31L) étant fixée au niveau du perçage gauche (11L), notamment par un système vis-écrou.

9. Agencement (2) selon la revendication précédente, **caractérisé en ce que** le bras droit (31R) et le bras gauche (31L) sont courbés et/ou pliés entre leur première extrémité (36R ; 36L) et leur deuxième extrémité (37R ; 37L) respective, notamment en présentant un angle droit ou sensiblement un angle droit.

10. Agencement (2) selon l'une des revendications précédentes, **caractérisé en ce que** l'agencement (2) comprend un longeronnet gauche (4L) s'étendant longitudinalement depuis le réservoir (3), notamment depuis la face arrière (3R) du réservoir, jusqu'à la traverse d'absorption de chocs (11) et un longeronnet droit (4R) s'étendant longitudinalement depuis le réservoir (3), notamment depuis la face arrière (3R) du réservoir, jusqu'à la traverse d'absorption de chocs (11).

11. Agencement (2) selon l'une des revendications précédentes, **caractérisé en ce que** le réservoir (3) est obtenu en matériaux composites et comprend des trous traversant (3H), notamment selon la direction longitudinale et/ou transversale et/ou verticale, les trous traversant (3H) permettant la fixation de la colonnette centrale (20), éventuellement par l'intermédiaire d'une embase (60) s'étendant sensiblement dans un plan vertical et transversal, l'embase (60) étant alors fixée à une face arrière (3R) du réservoir s'étendant sensiblement dans un même plan.

12. Véhicule (1), notamment véhicule automobile, **caractérisé en ce qu'**il comprend un agencement (2) selon l'une des revendications précédentes.

13. Procédé d'assemblage d'un agencement (2) selon l'une des revendications 6 à 9, **caractérisé en ce qu'**il comprend une étape de fourniture :
- d'une partie de caisse (100) pour un véhicule (1), la partie de caisse (100) comprenant un réservoir (3), une traverse d'absorption de chocs (11) et une colonnette centrale (20), la colonnette centrale (20) comprenant un moyen de fixation (21) pour un crochet d'attelage (30), le moyen de fixation (21) comprenant un taraudage (22),
- d'un crochet d'attelage (30) comprenant une partie filetée (32), suivie d'une étape de fixation du crochet d'attelage (30) par vissage de la partie filetée (32) du crochet d'attelage (30) dans le taraudage (22) du moyen de fixation (21), éventuellement en utilisant les bras droit et gauche (31R, 31L) en tant que bras de levier pour faciliter le vissage, les bras droit et gauche (31R, 31L) étant alors pivotés de sorte à ne pas interférer avec la traverse d'absorption de chocs (11) au cours du vissage.
